# EUROPEAN PATENT SPECIFICATION

(11) **EP 2 897 437 B1**
(45) Date of publication and mention of the grant of the patent: **20.02.2019**
(21) Application number: 15157229.4
(22) Date of filing: 01.12.2010
(51) Int. Cl.: H04W 74/08, H04W 4/00

(54) **COMPUTER PROGRAM PRODUCT FOR RANDOMISING NETWORK ACCESS TIME**
COMPUTERPROGRAMMPRODUKT ZUR RANDOMISIERUNG DER NETZWERKZUGANGSZEIT
PRODUIT DE PROGRAMME INFORMATIQUE POUR LA RANDOMISATION DU TEMPS D'ACCÈS AU RÉSEAU

(30) Priority: 02.12.2009 CN 200910252899
(43) Date of publication of application: 22.07.2015
(62) Divisional of application: 13186097.5
(73) Proprietor: Huawei Technologies Co., Ltd., Longgang District Shenzhen, Guangdong 518129 (CN)
(72) Inventor: Deng, Yongfeng, 518129 Shenzhen (CN); Shu, Bing, 518129 Shenzhen (CN); Qin, Jun, 518129 Shenzhen (CN); Zhao, Yang, 518129 Shenzhen (CN)
(74) Representative: Thun, Clemens

(56) References cited:
- EP-A1- 2 096 884
- WO-A2-01/37494
- US-A- 5 729 542
- SIEMENS NETWORKS: "RACH back-off control", 3GPP DRAFT; R2-071316, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Julian; 20070322, 22 March 2007 (2007-03-22), XP050134266,
- TSG-SA WG4: "3GPP TS 26.346 version 2.0.0 Multimedia Broadcast/Multicast Service; Protocols and Codecs (Release 6)", 3GPP DRAFT; SP-050082, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Tokyo, Japan; 20050307, 7 March 2005 (2005-03-07), XP050204306,

## Description

### FIELD OF THE INVENTION

The present invention relates to the field of communications technologies, and in particular, to a computer software product.

### BACKGROUND OF THE INVENTION

M2M (Machine to Machine, "machine" to "machine") communications is connecting various end equipment or sub-systems that are omnipresent through a plurality of communications technologies, and converging the equipment or sub-systems into a management system so as to manage and serve the end equipment or the sub-systems. For example, a module capable of monitoring running parameters of a power distribution network is installed in electric equipment so as to implement real-time monitoring, control, and management & maintenance of a power distribution system; a module capable of collecting information of oil well working conditions is installed in petroleum equipment to adjust and control oil well equipment remotely so as to learn about working conditions of the oil well equipment precisely in time; and a terminal for collecting vehicle load information and a remote monitoring system are mounted in automobiles to monitor vehicle running states.

Applications of M2M services require that M2M terminals are deployed within a certain region at a large number. Moreover, most M2M services feature a small data volume, scattered and frequent data transmission, and diversified service types. Therefore, the launch of the M2M services may interrupt the current mature commercial communication networks and cause capacity impact on the networks. For example, the number of the M2M terminals is large, and if the M2M terminals access a network at the same time, a burst spike of access bursts (Access Burst, AB) is bound to occur, as a result, an access channel is congested.

Regarding the problem of how to avoid the impact on the existing communication networks based on the radio resource management after the M2M services are introduced and satisfy requirements of the M2M services at the same time, currently, an M2M application platform configures different data transmission parameters for different M2M terminals through signaling, so as to control different M2M terminals to make them to access the network and transmit data at different time periods.

However, in the implementation of the M2M communications, the prior art at least has the following problem:
To prevent collision of the M2M terminals when they attempt to obtain access resources, dedicated access time needs to be assigned for each M2M terminal, which definitely increases signaling loads of the network.

US 5 729 542A discloses a method for accessing a communication system that relies on the use of varying access probabilities for subscribers or messages of varying priority. A serving infrastructure entity determines access probabilities in response to known system parameters like the current rate of access attempts for each priority class of user/message. Values representative of these access probabilities are then transmitted to the subscriber unit(s), for example by use of a system broadcast channel or control channels. These values are then used by the subscriber units in determining when to access an uplink channel. A temporal and/or proportional priority distribution approach is preferably used in determining the access values. As a result of this contention-based prioritization, an expedited access is achieved by higher priority units/traffic, thus increasing their throughput.

### SUMMARY OF THE INVENTION

Embodiments of the present invention provide a computer software product.

To achieve the above objectives, the embodiments of the present invention adopt technical solutions in the following. The embodiments and/or examples of the following description which are not covered by the appended claims are considered as not being part of the present invention.

An aspect of the invention provides a computer software product including instructions, which when run on a computer equipment, instruct the computer equipment to perform the following operations:
obtaining data transmission configuration information, wherein the data transmission configuration information comprises start time, an effective duration of data transmission, and randomization granularity;
determining service triggering time according to a predetermined triggering time randomization policy; and
at the determined service triggering time, initiating a random access request procedure;
wherein the determining the service triggering time according to the predetermined triggering time randomization policy comprises:
   calculating a time span of the data transmission according to the start time and the effective duration of the data transmission;
   dividing the time span into at least one time interval according to the randomization granularity; and
   randomly selecting a time interval from the at least one time interval, wherein start time of the selected time interval is the service triggering time.

In the computer software product provided in the embodiments of the present invention, different terminals are grouped, and then different frames are allocated to different groups of terminals for network random access. Therefore, a burst spike of access bursts caused by initiating M2M services at the same time is prevented, thereby effectively solving the problem of a congestion phenomenon of a random access channel effectively. Moreover, through the solutions provided by the embodiments of the present invention, there is no need to assign dedicated access time through delivering signaling to each terminal by an M2M server, thereby reducing signaling loads of the network.

### BRIEF DESCRIPTION OF THE DRAWING

To describe the technical solutions according to the embodiments of the present invention or in the prior art more clearly, the accompanying drawings for describing the embodiments are introduced briefly in the following. Apparently, the accompanying drawings in the following description are only some embodiments of the present invention, and persons skilled in the art can derive other drawings from the accompanying drawings without creative efforts.
FIG. 1 is a flow chart of a network access method according to Embodiment 1 of the present invention;
FIG. 2 is a schematic structural diagram of a network access apparatus according to Embodiment 1 of the present invention;
FIG. 3 is a signaling flow chart of a network access method according to Embodiment 2 of the present invention;
FIG. 4 is a signaling flow chart of a network access method according to Embodiment 3 of the present invention;
FIG. 5 is a signaling flow chart of a network access method according to Embodiment 4 of the present invention;
FIG. 6 is a schematic structural diagram of a network access apparatus according to example 5;
FIG. 7 is a schematic structural diagram of a network access system according to example 6;
FIG. 8 is a flow chart of a network access method according to example 7; and
FIG. 9 is a schematic structural diagram of a network access apparatus according to example 7.

### DETAILED DESCRIPTION OF THE EMBODIMENT

The technical solutions of the present invention are clearly described in the following with reference to the accompanying drawings. It is obvious that the embodiments to be described are only a part rather than all of the embodiments of the present invention.

Embodiments of the present invention provide a computer software product, which is used to solve the problem of access congestion without adding signaling loads of the network. A network access method and apparatus are described in detail below with reference to the accompanying drawings, wherein the following technical solutions or part of them can be embodied in the form of a computer software product according to the present invention. Further, it should be noted that the examples 5-7 are not embodiments of the invention but helpful for understanding the invention.

### Embodiment 1

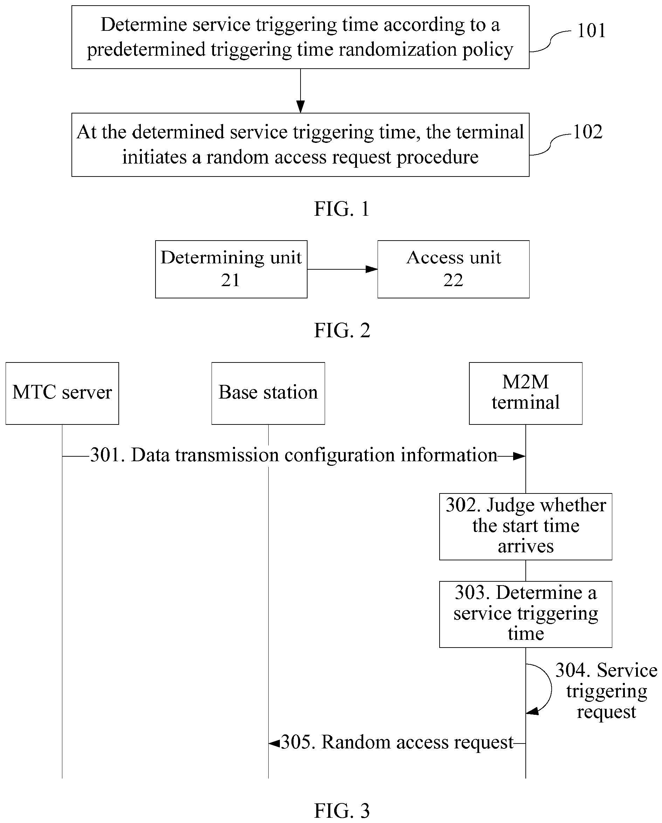

As shown in FIG. 1, this embodiment provides a network access method, which includes the following steps:
101: Determine service triggering time according to a predetermined triggering time randomization policy.

In the predetermined triggering time randomization policy, a certain time within a time span of data transmission may be randomly selected as the service triggering time; or, a triggering condition (for example, a threshold) may be set, and the time when the triggering condition is met is the service triggering time.

The service triggering time may be network access time when an M2M terminal reports information for a specific service. Taking a smart metering service for example, the service triggering time may be the time of initiating a network random access request when the M2M terminal needs to report power consumption data.

102: At the determined service triggering time, the terminal initiates a random access request procedure.

Specifically, the M2M terminal may select an access burst (AB) according to an existing network random access process to initiate a random access request to trigger a specific service establishing process.

In this embodiment, the executor of the above steps may be the M2M terminal.

To better implement the foregoing method, this embodiment also provides a network access apparatus, which includes a determining unit 21 and an access unit 22, where
the determining unit 21 is configured to determine service triggering time according to a predetermined triggering time randomization policy; and
the access unit 22 is configured to initiate a random access request procedure at the determined service triggering time.

In this embodiment, the network access apparatus may be the M2M terminal.

In the network access method and apparatus provided in the embodiments, the terminal side determines random time as the service triggering time according to the predetermined policy. In this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network.

### Embodiment 2

As shown in FIG. 3, this embodiment provides a network access method, which includes the following steps:
301: An MTC server (Machine Type Communication Server, machine type communication server) transmits data transmission configuration information to an in-group M2M terminal.

The in-group M2M terminal refers to an M2M terminal in the same terminal group.

In this embodiment, the data transmission configuration information includes start time and an effective duration of an M2M terminal for performing the data transmission. The start time and the effective duration define a time span for the M2M terminal to perform the data transmission. If the data transmission configuration information does not include the start time, the terminal regards the time when the terminal receives the data transmission configuration information as the start time of the data transmission by default.

In addition, the data transmission configuration information may further include service randomization configuration information, and the service randomization configuration information includes randomization granularity, or the randomization granularity and a service triggering threshold. The randomization granularity may be a fixed time period, for example, 120/26ms, 5ms, and 10ms. The service triggering threshold may be configured to any value within an open interval of (0,1). Definitely, the randomization granularity and the service triggering threshold may also be directly fixed in the M2M terminal to simplify a configuration process of data transmission information.

Taking a smart metering service for example, the MTC server may configure the following: a smart metering terminal reports power consumption information between 9 o'clock and 10 o'clock. In addition, the MTC server may also indicate that the randomization granularity of current data transmission is 36ms, or the service triggering threshold is 10-4.

The M2M terminal may locally store corresponding data transmission configuration and use it in a next data transmission process.
302: The M2M terminal judges whether the start time of the data transmission in the data transmission configuration information arrives. If the time arrives, perform step 303; and if the time does not arrive, repeat step 302.
303: In an application layer of the M2M terminal, determine service triggering time according to a predetermined triggering time randomization policy and the data transmission configuration information transmitted by the MTC server.

Specifically, this embodiment provides two methods for determining the service triggering time as follows:
1) Regarding a condition that the service randomization configuration information includes the randomization granularity only, the service triggering time may be determined through the following process:
   The M2M terminal calculates a time span of data transmission according to the start time and the effective duration of the data transmission, then divides the time span into several time intervals according to the randomization granularity, and randomly selects start time of a time interval from the several time intervals to serve as the service triggering time.
   Taking the foregoing smart metering service for example, the MTC server configures the following: the start time of the data transmission is 9 o'clock, the effective duration is 1 hour, and the randomization granularity is 36ms, so that the time period from 9 o'clock to 10 o'clock may be divided into 100000 (1 h/36ms) time intervals. The M2M terminal selects one from the 100000 time intervals at equal probability to serve as service triggering time interval. The start time of the service triggering time interval is the service triggering time. From the probability theory, it may be deduced that the probability of initiating a smart metering service within any time interval by each M2M terminal is 10-5.
2) Regarding a condition that the service randomization configuration information includes the randomization granularity and a service triggering threshold, the service triggering time may be determined through the following process:
   The M2M terminal calculates a time span of data transmission according to the start time and the effective duration of the data transmission, then divides the time span into several time intervals according to the randomization granularity, and generates a random number in a range (0,1) at each interval of the at least one time interval in sequence at equal probability till a random number smaller than the service triggering threshold occurs, where the start time of a current time interval corresponding to the random number smaller than the service triggering threshold is the service triggering time.

Still taking the foregoing smart metering service for example, the MTC server configures the following: the start time of the data transmission is 9 o'clock, the effective duration is 1 hour, the randomization granularity is 36ms, and the service triggering threshold is 10-4, so that the time period from 9 o'clock to 10 o'clock may be divided into 100000 (1 h/36ms) time intervals. The M2M terminal generates a random number in the range (0,1) within any time interval at equal probability. Comparing the random number with the service triggering threshold 10-4, if the random number is smaller than the service triggering threshold 10-4, the M2M terminal uses the start time of a current time interval as the service triggering time to trigger the smart metering service; if the random number is not smaller than the service triggering threshold 10-4, the M2M terminal waits for a next service triggering time interval to generate a new random number, and compares the new random number with the service triggering threshold. In the implementation method, the probability of initiating a smart metering service within any time interval by each M2M terminal is 10-4.
304: The application layer of the M2M terminal sends a service triggering request to an RR (Radio Resources, radio resources) layer at the determined service triggering time.
305: After receiving the service triggering request, the RR layer of the M2M terminal selects, according to the existing random access process, an access burst to send a random access request to a base station to trigger a service establishing process.

After the data transmission is completed, the M2M terminal exits the current data transmission process.

In the data transmission process, if the M2M terminal receives an access prohibition indication delivered by the base station due to reasons such as network overload, the RR layer of the M2M terminal forwards the access prohibition indication to the application layer after receiving the access prohibition indication. After receiving the access prohibition indication, the application layer stops sending a service request. After receiving an access permission indication delivered by the base station, the RR layer reports the access permission indication to the application layer. Then, the application layer re-calculates a new effective transmission duration (that is, a remaining part in the time span of the data transmission configured by the MTC server), and re-selects service triggering time to continue the foregoing data transmission process.

In the network access method of this embodiment, the application layer of the terminal side determines random time as the service triggering time according to a predetermined policy. In this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network.

### Embodiment 3

In Embodiment 2, because the application layer of the M2M terminal is incapable of learning about the configuration condition of an access channel on a radio interface, the use efficiency of a service random triggering mechanism cannot be maximized. For example, if a current cell is configured with two random access channels at the same time, the access opportunity may be provide two M2M terminals at the same time. However, the application layer of the M2M terminal may select the service triggering time in the dimension of time only, so that 1/2 of the access channel resources are idle. Therefore, this embodiment provides a network access method based on RR layer control to implement a service triggering randomization mechanism.

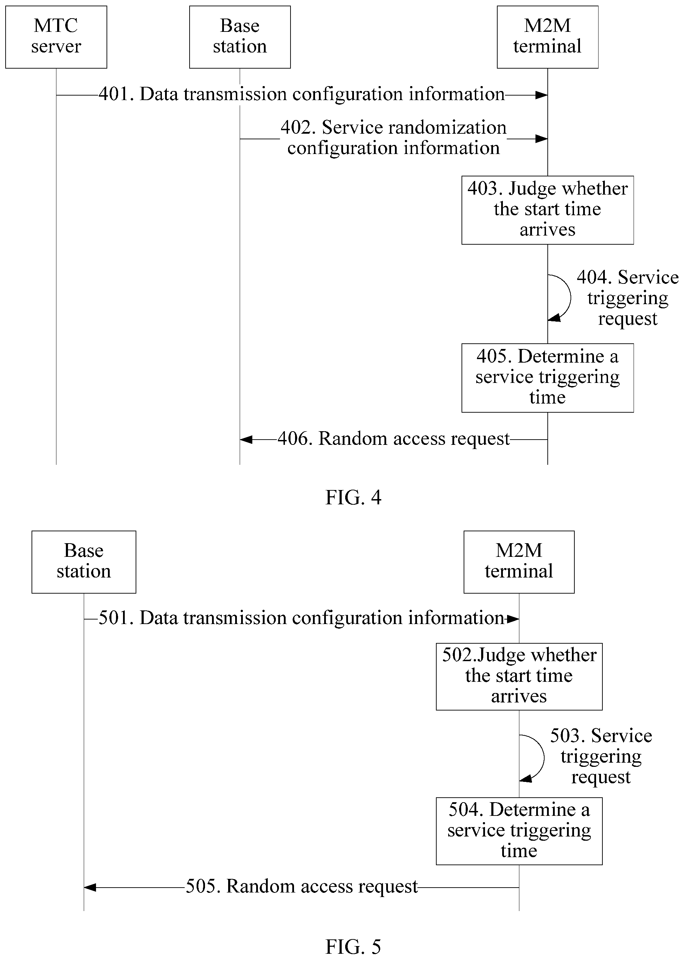

As shown in FIG. 4, this embodiment provides a network access method, which includes the following steps:
401: An MTC server transmits data transmission configuration information to an in-group M2M terminal.

In this embodiment, the data transmission configuration information includes start time and an effective duration of an M2M terminal for performing the data transmission. The start time and the effective duration define a time span for the M2M terminal to perform the data transmission. If the data transmission configuration information does not include the start time, the terminal regards the time when the terminal receives the data transmission configuration information as the start time of the data transmission by default.
402: Abase station broadcasts M2M service randomization configuration information to the M2M terminal.

The service randomization configuration information includes randomization granularity, or the randomization granularity and a service triggering threshold. The randomization granularity may be a fixed time period, for example, 1 TS (Time Slot, time slot) or 2 TS. The service triggering threshold may be configured to any value within an open interval of (0,1).

Taking a smart metering service for example, the MTC server may configure the following: a smart metering terminal reports power consumption information between 9 o'clock and 10 o'clock. In addition, the base station may further indicate that the randomization granularity of the current data transmission is 1 TS (120/26ms) or the service triggering threshold is 1/78000.

The M2M terminal may locally store corresponding configuration information and use it in a next data transmission process.

Definitely, the randomization granularity and the service triggering threshold may also be directly fixed in the M2M terminal to save air-interface transmission resources. In this circumstance, there is no need to perform step 402; and step 403 is performed directly after step 401.
403: The M2M terminal judges whether the start time of the data transmission in the data transmission configuration information arrives. If the time arrives, perform step 404; and if the time does not arrive, repeat step 403.
404: An application layer of the M2M terminal sends a service triggering request to an RR layer, where the request carries the effective duration (1 hour) of the data transmission.
405: After receiving the effective duration of the data transmission delivered by the application layer, the RR layer of the M2M terminal determines service triggering time according to a predetermined triggering time randomization policy and the received M2M service randomization configuration information delivered by the base station.

Specifically, this embodiment provides two methods for determining the service triggering time as follows:
1) Regarding a condition that the service randomization configuration information includes the randomization granularity only, the service triggering time may be determined through the following process:
   The M2M terminal calculates a time span of data transmission according to the start time and the effective duration of the data transmission, then divides the time span into several time intervals according to the randomization granularity, and randomly selects a time interval from the several time intervals to serve as a service triggering time interval, where a start time slot of the service triggering time interval is the service triggering time.
   Taking the foregoing smart metering service for example, the MTC server configures the following: the start time of the data transmission is 9 o'clock, the effective duration is 1 hour, and the randomization granularity indicated by the base station is 1 TS (120/26ms), so that the time period from 9 o'clock to 10 o'clock may be divided into 780000 time intervals. The M2M terminal selects one from the 780000 time intervals at equal probability to serve as a service triggering time interval. The start time slot of the service triggering time interval is the service triggering time. From the probability theory, it may be deduced that the probability of initiating a smart metering service within any time slot by each M2M terminal is 1/780000.
2) Regarding a condition that the service randomization configuration information includes the randomization granularity and a service triggering threshold, the service triggering time may be determined through the following process:
   The M2M terminal calculates a time span of the data transmission according to the start time and the effective duration of the data transmission, then divides the time span into several time intervals according to the randomization granularity, and generates a random number in the range (0,1) at each interval of the at least one time interval in sequence at equal probability till a random number smaller than the service triggering threshold occurs, where the start time slot of a current time interval corresponding to the random number smaller than the service triggering threshold is the service triggering time.

Still taking the foregoing smart metering service for example, the MTC server configures the following: the start time of the data transmission is 9 o'clock, the effective duration is 1 hour, the randomization granularity indicated by the base station is ITS (120/26ms), and the service triggering threshold is 1/78000, so that the time period from 9 o'clock to 10 o'clock may be divided into 780000 (1 h/1 TS) time intervals, and the M2M terminal generates a random number in the range (0,1) within any time interval at equal probability. Comparing the random number with the service triggering threshold 1/78000, if the random number is smaller than the service triggering threshold 1/78000, the M2M terminal uses the start time slot of the current time interval as the service triggering time to trigger the smart metering service; if the random number is not smaller than the service triggering threshold 1/78000, the M2M terminal waits for a next time interval to generate a new random number, and compares the random number with the service triggering threshold. In the implementation method, the probability of initiating a smart metering service within any time slot by each M2M terminal is 1/78000.

In this embodiment, the service triggering time determined by the RR layer of the M2M terminal corresponds to a "triggering time of an immediate assignment procedure" (TS44.018 3.3.1.1.2 Initiation of the immediate assignment procedure) in a standard.
406: After the determined service triggering time arrives, the RR layer of the M2M terminal selects, according to the existing random access process, an access burst to send a random access request to the base station to trigger a service establishing process.

In the solution of using the first method to determine the service triggering time, the RR layer of the M2M terminal may enter a dormant state before the service triggering time arrives, so that power resources may be saved.

After the data transmission is completed, the M2M terminal exits the current data transmission process.

In the data transmission process, if the M2M terminal receives an access prohibition indication delivered by the base station due to reasons such as network overload, the RR layer of the M2M terminal needs to monitor access indication information of the base station and adjust the effective transmission duration (that is, a remaining part in the time span of the data transmission configured by the MTC server) in real time. After receiving an access permission indication delivered by the base station, the RR layer of the M2M terminal re-selects service triggering time to continue the foregoing data transmission process.

In the network access method of this embodiment, the radio resources layer (RR layer) of the terminal side determines random time as the service triggering time according to a predetermined policy, in this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network. In addition, the RR layer can obtain the configuration condition of the access channel on the radio interface directly, and therefore a service triggering mechanism can be adjusted in real time and the use efficiency of the service random triggering mechanism can be increased.

### Embodiment 4

In this embodiment, a service randomization triggering solution of performing data transmission configuration in a communication system is provided.

As shown in FIG. 5, this embodiment provides a network access method, which includes the following steps:
501: A base station broadcasts data transmission configuration information to an in-group M2M terminal.

In this embodiment, the data transmission configuration information includes a start frame number and an effective frame quantity of an M2M terminal for performing the data transmission. If the data transmission configuration information does not include the start frame number, the terminal regards a radio frame of the received data transmission configuration information as the start frame of the data transmission by default.

In addition, the data transmission configuration information may further include service randomization configuration information, and the service randomization configuration information includes a service triggering threshold. The service triggering threshold may be configured to any value within an open range (0,1).

Taking a smart metering service for example, the MTC server may configure the following: a smart metering terminal reports power consumption information between 0 and 9999 frames. In addition, the base station may also indicate that the service triggering threshold of the current data transmission is 1/1000.

The M2M terminal may locally store corresponding configuration information and use it in a next data transmission process.

Definitely, the service triggering threshold may also be fixed in the M2M terminal directly to save air-interface transmission resources.
502: The M2M terminal judges whether the start frame used for data transmission in the data transmission configuration information arrives. If the time arrives, perform step 503; and if the time does not arrive, repeat step 502.
503: An application layer of the M2M terminal sends a service triggering request to an RR layer, where the request carries the effective frame quantity of the data transmission.
504: After receiving the effective frame quantity delivered by the application layer, the RR layer of the M2M terminal determines service triggering time according to a predetermined triggering time randomization policy.

Specifically, this embodiment provides two methods for determining the service triggering time as follows:
1) Regarding a condition that the data transmission configuration information merely includes the start frame number and the effective frame quantity, the service triggering time may be determined through the following process:
   The M2M terminal determines several effective frames that may be used in the data transmission according to the start frame number and the effective frame quantity of the data transmission, and then randomly selects one from the several effective frames, where an access time slot corresponding to the selected frame is the service triggering time.
   Taking the foregoing smart metering service for example, the network (base station) configures the following: the effective frames of data transmission are 0 to 9999 frames, and the M2M terminal selects one from the effective frames at equal probability and uses the access time slot corresponding to the selected frame as the service triggering time. From the probability theory, it may be deduced that the probability of initiating a smart metering service within any time slot by each M2M terminal is 1/10000.
2) Regarding that the data transmission configuration information further includes service randomization configuration information, namely, a condition that the data transmission configuration information further includes the service triggering threshold, the service triggering time may be determined through the following process:
   The M2M terminal determines several effective frames that may be used in the data transmission according to the start frame number and the effective frame quantity of the data transmission, and then generates random numbers in a range of (0,1) sequentially within an access time slot corresponding to the several effective frames at equal probability till a random number smaller than the service triggering threshold occurs, where the access time slot of a current frame corresponding to the random number smaller than the service triggering threshold is the service triggering time.

Still taking the foregoing smart metering service for example, the base station configures the following: the effective frames of data transmission are 0 to 9999 frames, and the service triggering threshold is 1/1000, so that the M2M terminal generates a random number in the range (0,1) within an access time slot corresponding to any effective frame at equal probability. Comparing the random number with the service triggering threshold 1/1000, if the random number is smaller than the service triggering threshold 1/1000, the M2M terminal uses an access time slot corresponding to a current frame as the service triggering time to trigger the smart metering service; if the random number is not smaller than the service triggering threshold 1/1000, the M2M terminal waits for a next frame to generate a new random number, and compares the random number with the service triggering threshold. In the implementation method, the probability of initiating a smart metering service within any time slot by each M2M terminal is 1/1000.

In this embodiment, the service triggering time determined by the RR layer of the M2M terminal corresponds to a "triggering time of an immediate assignment procedure" (TS44.018 3.3.1.1.2 Initiation of the immediate assignment procedure) in a standard.
505: After the determined service triggering time arrives, the RR layer of the M2M terminal selects, according to the existing random access process, an access burst to send a random access request to the base station to trigger a service establishing process.

In the solution of using the first method to determine the service triggering time, the RR layer of the M2M terminal may enter a dormant state before the service triggering time arrives, so that power resources may be saved.

After the data transmission is completed, the M2M terminal exits the current data transmission process.

In the network access method of this embodiment, an existing communication system is directly used to implement the M2M services, and the M2M terminal determines a time slot corresponding to an access frame as the service triggering time according to the predetermined policy. In this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network. In addition, the RR layer can obtain the configuration condition of the access channel on the radio interface directly, and therefore a service triggering mechanism can be adjusted in real time and the use efficiency of the service random triggering mechanism can be increased.

### Example 5

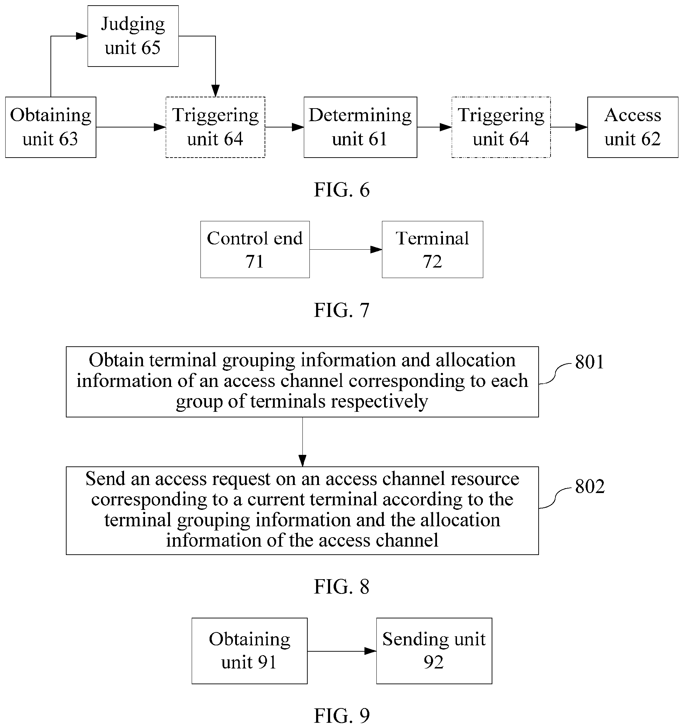

Corresponding to the aforementioned network access methods, this example further provides a network access apparatus, as shown in FIG. 6, which includes a determining unit 61, an access unit 62, and an obtaining unit 63.

The obtaining unit 63 is configured to obtain data transmission configuration information, where the data configuration information includes start time and an effective duration of data transmission. Specifically, the start time and the effective duration of the data transmission are configured and delivered by an MTC server or a base station. If the data transmission configuration information delivered by the MTC server or the base station does not carry the start time of the data transmission, the obtaining unit 63 regards the time when it receives the data transmission configuration information as the start time of the data transmission by default.

The data transmission configuration information may further include randomization granularity, or the randomization granularity and a service triggering threshold. The randomization granularity and the service triggering threshold may be configured and delivered by the MTC server or the base station, or preset in the network access apparatus.

The determining unit 61 determines service triggering time according to a predetermined triggering time randomization policy and the start time, the effective duration, and service randomization configuration information of the data transmission.

When the determined service triggering time arrives, the access unit 62 sends a random access request to the base station to trigger the service establishing process.

The network access apparatus provided in this example further includes a triggering unit 64 located at the application layer.

If the determining unit 61 is located at the radio resource layer (RR layer) of the apparatus, the triggering unit 64 is configured to send a service triggering request to the radio resource layer to trigger the determining unit 61 located at the RR layer to execute an operation of determining the service triggering time.

If the determining unit 61 is located at the application layer of the apparatus, the triggering unit 64 is configured to send the service triggering request to the radio resource layer at the service triggering time determined by the determining unit 61.

In the network access apparatus provided in this example, the determining unit 61 may be implemented in the following manners.

In one manner, the determining unit 61 may include:
a calculating module, configured to calculate a time span of the data transmission according to
a dividing module, configured to divide the time span into at least one time interval according to the randomization granularity; and
a selecting module, configured to randomly select a time interval from the at least one time interval, where the start time of the selected time interval is the service triggering time.

In another manner, the determining unit 61 may include:
a calculating module, configured to calculate a time span of the data transmission according to the start time and the effective duration of the data transmission;
a dividing module, configured to divide the time span into at least one time interval according to the randomization granularity; and
a generating module, configured to generate a random number in the range (0,1) at each interval of the at least one time interval in sequence at equal probability till a random number smaller than the service triggering threshold occurs, where the start time of a current time interval is the service triggering time.

In addition, the network access apparatus provided in this example may further include a judging unit 65, configured to judge whether the start time of the data transmission arrives.

The determining unit 61 needs to determine the service triggering time according to the predetermined triggering time randomization policy after the judging unit 65 determines that the start time of the data transmission arrives.

In the network access apparatus provided in the example, the terminal side determines random time as the service triggering time according to the predetermined policy. In this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network.

### Example 6

An example also provides a network access system, as shown in FIG. 7, which includes a control end 71 and a terminal 72.

The control end 71 is configured to transmit data transmission configuration information to the terminal 72.

The terminal 72 is configured to determine service triggering time according to a predetermined triggering time randomization policy and the data transmission configuration information, and initiate a random access request procedure to a base station when the service triggering time arrives.

The data transmission configuration information includes start time and an effective duration of the data transmission.

Preferably, the data transmission configuration information may further include randomization granularity; or, the data transmission configuration information may further include randomization granularity and a service triggering threshold.

The randomization granularity and service triggering threshold information may also be fixed in the terminal 72 directly. In such case, the data transmission configuration information may include only the start time and the effective duration of the data transmission.

In this example, the control end 71 is a logical concept, which may be an MTC server or a part of the base station.

In the network access system provided in the example, the terminal side determines random time as the service triggering time according to the predetermined policy. In this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network.

### Example 7

All M2M terminals sharing the same channel send access requests on the channel. When a large number of M2M terminals send access requests at the same time, an access conflict may occur. Therefore, in the solution provided in this example, the access channels are scheduled in groups.

An example also provides a network access method, as shown in FIG. 8, which includes the following steps:
801: Obtain terminal grouping information and allocation information of an access channel corresponding to each group of terminals respectively.
802: Send an access request on an access channel resource corresponding to a current terminal according to the terminal grouping information and the allocation information of the access channel.

The executor of each step may be an M2M terminal. In addition, the allocation information of the access channel may be frame allocation information in the access channel.

Specifically, the network side groups the M2M terminals, determines to allocate different frames of the access channel to different groups of M2M terminals, and then broadcasts the M2M terminal grouping information and frame allocation information of the access channel respectively corresponding to each group of terminals to the M2M terminals. After obtaining the corresponding grouping information and frame allocation information, an M2M terminal sends an access request in a frame specified by a frame number corresponding to the group to which the M2M terminal belongs. In this way, the conflict when a large number of terminals send access requests in the same frame at the same time can be reduced to a large extent.

The grouping method includes grouping according to a terminal identifier (for example, the IMSI, International Mobile Subscriber Identity) by using a certain algorithm. Grouping information may be an indication sent by the network to the M2M terminals through signaling, and definitely may be configured and pre-stored in the M2M terminals.

Generally, different groups of terminals share frame resources of the access channels by the same proportion, as shown in Table 1:

**Table 1**

| | | | | | | | | | | |
|---|---|---|---|---|---|---|---|---|---|---|
| group 1 | group2 | group3 | ...... | groupN | group 1 | group2 | group3 | ...... | groupN | ...... |

Definitely, for some terminals executing high-priority services, the probability of accessing the network may be increased through changing the proportion of frame resources occupied by the terminals in the access channels. The high-priority services may be scheduled more frequently, so as to ensure that M2M high-priority/emergent service data is transmitted in time. As shown in Table 2, Group 1 is an alarm service with high priority, and Group2 and Group3 are ordinary services. Therefore, Group 1 sends access requests more frequently than the other groups.

**Table 2**

| | | | | | | | | | | | | |
|---|---|---|---|---|---|---|---|---|---|---|---|---|
| group 1 | group2 | group 1 | Group3 | ...... | groupN | group1 | group2 | group1 | group3 | ...... | groupN | ...... |

To better implement the aforementioned network access method, this example further provides a network access apparatus, as shown in FIG. 9, which includes:
an obtaining unit 91, configured to obtain terminal grouping information and allocation information of an access channel corresponding to each group of terminals respectively; and
a sending unit 92, configured to send an access request on an access channel resource corresponding to a current terminal according to the terminal grouping information and the allocation information of the access channel.

In the method and apparatus provided in the embodiments and examples, different terminals are grouped into different groups, and then different frames are allocated to different groups of terminals for network random access. Therefore, a burst spike of access bursts caused by initiating M2M services at the same time is prevented, thereby solving the problem of a congestion phenomenon of a random access channel effectively. Moreover, through the solutions provided by the embodiments and examples, there is no need to assign dedicated access time through delivering signaling to each terminal by an M2M server, thereby reducing signaling loads of the network.

The network access method and apparatus provided in the embodiments and examples are applicable to all radio communication systems, including but not limited to the GSM (Global System for Mobile Communications, global system for mobile communications), the WCDMA (Wideband Code Division Multiple Access, wideband code division multiple access), the TD-SCDMA (Time Division-Synchronous Code Division Multiple Access, time division-synchronous code division multiple access), the LTE (Long Term Evolution, long term evolution), the Wimax (Worldwide Interoperability for Microwave Access, worldwide interoperability for microwave access), and the like.

Through the above description of the implementation manners, it is clear to persons skilled in the art that the present invention can be accomplished through software on a necessary hardware platform, or definitely through hardware. Based on this, the above technical solutions or the part that makes contributions to the prior art can be substantially embodied in the form of a computer software product according to the present invention. The computer software product may be stored in a storage medium such as a ROM/RAM, a magnetic disk, or an optical disk, and contain several instructions to instruct computer equipment (for example, a personal computer, a server, or network equipment) to perform the method described in the embodiments or in some parts of the embodiments.

## Claims

1. A computer software product comprising instructions which, when run on a computer equipment, instruct the computer equipment to perform the following operations:
obtaining data transmission configuration information (301, 401, 402), wherein the data transmission configuration information comprises start time, an effective duration of data transmission, and randomization granularity;
determining (101, 303, 405) service triggering time according to a predetermined triggering time randomization policy; and
at the determined service triggering time, initiating (102, 305, 406) a random access request procedure;
wherein the determining the service triggering time according to the predetermined triggering time randomization policy comprises:
calculating a time span of the data transmission according to the start time and the effective duration of the data transmission;
dividing the time span into at least one time interval according to the randomization granularity; and
randomly selecting a time interval from the at least one time interval, wherein start time of the selected time interval is the service triggering time.

2. The computer software product according to claim 1, wherein before the determining the service triggering time according to the predetermined triggering time randomization policy, the operations further comprise:
sending (404) a service triggering request to a radio resource layer , and
the determining the service triggering time according to the predetermined triggering time randomization policy comprises: determining the service triggering time according to the predetermined triggering time randomization policy.

3. The computer software product according to claim 2, wherein the service triggering time is triggering time of an immediate assignment procedure.

4. The computer software product according to any one of claims 1 to 3, wherein
the determining the service triggering time according to the predetermined triggering time randomization policy comprises: determining the service triggering time according to the predetermined triggering time randomization policy; and
before the initiating the random access request procedure, the operations further comprises:
sending (304) a service triggering request to a radio resource layer at the determined service triggering time.

5. The computer software product according to claim 1, wherein after the obtaining the data transmission configuration information, the operations further comprise:
judging (302, 403) whether the start time of the data transmission in the data transmission configuration information arrives; and
the determining the service triggering time according to the predetermined triggering time randomization policy comprises: after the start time of the data transmission arrives, determining the service triggering time according to the predetermined triggering time randomization policy.

## Patentansprüche

1. Computersoftwareprodukt, umfassend Anweisungen, die, wenn sie auf einer Computerausrüstung ausgeführt werden, die Computerausrüstung anweisen, folgende Operationen auszuführen:
Erhalten von Datenübertragungskonfigurationsinformationen (301, 401, 402), wobei die Datenübertragungskonfigurationsinformationen eine Startzeit, eine tatsächliche Dauer einer Datenübertragung und eine Randomisierungsgranularität umfassen;
Bestimmen (101, 303, 405) einer Dienstauslösezeit gemäß einer vorbestimmten Auslösezeitrandomisierungsrichtlinie; und
zu der bestimmten Auslösezeit, Initiieren (102, 305, 406) eines Zufallszugriffsanfragevorgangs;
wobei das Bestimmen der Dienstauslösezeit gemäß der vorbestimmten Auslösezeitrandomisierungsrichtlinie umfasst:
Berechnen einer Zeitspanne der Datenübertragung gemäß der Startzeit und der tatsächliche Dauer der Datenübertragung;
Teilen der Zeitspanne in mindestens einen Zeitintervall gemäß der Randomisierungsgranularität; und
zufälliges Auswählen eines Zeitintervalls aus dem mindestens einen Zeitintervall, wobei die Startzeit des ausgewählten Zeitintervalls die Dienstauslösezeit ist.

2. Computersoftwareprodukt nach Anspruch 1, wobei vor dem Bestimmen der Dienstauslösezeit gemäß der vorbestimmten Auslösezeitrandomisierungsrichtlinie die Operationen ferner umfassen:
Senden (404) einer Dienstauslöseanfrage an eine Funkressourcenschicht, und
wobei das Bestimmen der Dienstauslösezeit gemäß der vorbestimmten Auslösezeitrandomisierungsrichtlinie umfasst: Bestimmen der Dienstauslösezeit gemäß der vorbestimmten Auslösezeitrandomisierungsrichtlinie.

3. Computersoftwareprodukt nach Anspruch 2, wobei die Dienstauslösezeit eine Auslösezeit eines unmittelbaren Zuweisungsvorgangs ist.

4. Computersoftwareprodukt nach einem der Ansprüche 1 bis 3, wobei das Bestimmen der Dienstauslösezeit gemäß der vorbestimmten Auslösezeitrandomisierungsrichtlinie umfasst: Bestimmen der Dienstauslösezeit gemäß der vorbestimmten Auslösezeitrandomisierungsrichtlinie; und
die Operationen vor dem Initiieren des Zufallszugriffsanfragevorgangs ferner umfassen: Senden (304) einer Dienstauslöseanfrage an eine Funkressourcenschicht zu der vorbestimmten Dienstauslösezeit.

5. Computersoftwareprodukt nach Anspruch 1, wobei die Operationen nach dem Erhalten der Datenübertragungskonfigurationsinformationen ferner umfassen:
Beurteilen (302, 403), ob die Startzeit der Datenübertragung in den Datenübertragungskonfigurationsinformationen eingeht; und
wobei das Bestimmen der Dienstauslösezeit gemäß der vorbestimmten Auslösezeitrandomisierungsrichtlinie umfasst: nachdem die Startzeit der Datenübertragung eingeht, Bestimmen der Dienstauslösezeit gemäß der vorbestimmten Auslösezeitrandomisierungsrichtlinie.

## Revendications

1. Produit logiciel informatique comprenant des instructions, qui, lorsqu'elles s'exécutent sur un équipement informatique, donnent comme instruction à l'équipement informatique d'effectuer les opérations suivantes consistant :
à obtenir des informations de configuration de transmission de données (301, 401, 402), dans lequel les informations de configuration de transmission de données comportent une heure de début, une durée effective d'une transmission de données et une granularité de randomisation ;
à déterminer (101,303,405) un moment de déclenchement de service en fonction d'une politique de randomisation de moment de déclenchement prédéterminée ; et
au moment de déclenchement de service déterminé, à initier (102, 305, 406) une procédure de demande d'accès aléatoire ;
dans lequel la détermination du moment de déclenchement de service en fonction d'une politique de randomisation de moment de déclenchement prédéterminée consiste :
à calculer un laps de temps de la transmission de données en fonction de l'heure de début et de la durée effective de la transmission de données ;
à diviser le laps de temps en au moins un intervalle de temps en fonction de la granularité de randomisation ; et
à sélectionner de manière aléatoire un intervalle de temps parmi le ou les intervalles de temps, dans lequel l'heure de début de l'intervalle de temps sélectionné et le moment de déclenchement de service.

2. Produit logiciel informatique selon la revendication 1, dans lequel, avant la détermination du moment de déclenchement de service en fonction de la politique de randomisation de moment de déclenchement prédéterminée, les opération consistent en outre :
à envoyer (404) une demande de déclenchement de service à une couche de ressources radio, et
la détermination du moment de déclenchement de service en fonction de la politique de randomisation de moment de déclenchement prédéterminée consiste : à déterminer le moment de déclenchement de service en fonction de la politique de randomisation de moment de déclenchement prédéterminée.

3. Produit logiciel informatique selon la revendication 2, dans lequel le moment de déclenchement de service est le moment de déclenchement d'une procédure d'attribution immédiate.

4. Produit logiciel informatique selon l'une quelconque des revendications 1 à 3, dans lequel
la détermination du moment de déclenchement de service en fonction de la politique de randomisation de moment de déclenchement prédéterminée consiste : à déterminer le moment de déclenchement de service en fonction de la politique de randomisation de moment de déclenchement prédéterminée ; et
avant d'initier la procédure de demande d'accès aléatoire, les opérations consistent en outre :
à envoyer (304) une demande de déclenchement de service à une couche de ressources radio au moment de déclenchement de service déterminé.

5. Produit logiciel informatique selon la revendication 1, dans lequel, après l'obtention des informations de configuration de transmissions de données, les opérations consistent en outre :
à évaluer (302, 403) si l'heure de début de la transmission de données dans les informations de configuration de transmission de données arrive ; et
la détermination du moment de déclenchement de service en fonction de la politique de randomisation de moment de déclenchement prédéterminée consiste : après que l'heure de début de la transmission de données arrive, à déterminer le moment de déclenchement de service en fonction de la politique de randomisation de moment de déclenchement prédéterminée.
